# FASCICULE DE BREVET EUROPEEN

(11) **EP 0 436 411 B1**
(45) Date de publication et mention de la délivrance du brevet: **24.04.1996**
(21) Numéro de dépôt: 90403346.1
(22) Date de dépôt: 27.11.1990
(51) Int. Cl.: H01S 3/23

(54) **Dispositif d'addition cohérente de faisceaux laser**
Vorrichtung zur kohärenten Addition von Laserstrahlen
Device for coherently combining laser beams

(30) Priorité: 01.12.1989 FR 8915878
(43) Date de publication de la demande: 10.07.1991
(73) Titulaire: THOMSON-CSF, F-75008 Paris (FR)
(72) Inventeur: Verdiell, Jean-Marc, F-92402 Courbevoie Cédex (FR); Huignard, Jean-Pierre, F-92402 Courbevoie Cédex (FR); Rajenbach, Henri, F-92402 Courbevoie Cédex (FR)
(74) Mandataire: Guérin, Michel

(56) Documents cités:
- US-A- 4 761 059
- US-A- 4 833 683
- OPTICS LETTERS, vol. 14, no. 1, janvier 1989, pages 81-83; W.R. CHRISTIAN et al.: "Energy transfer between injection-locked single-mode diode lasers by two- beam coupling in BaTiO3"
- APPL. PHYS. LETT., vol. 50, no. 24, juin 1987, pages 713-715; L. GOLDBERG et al.: "Injection locking and single-mode fiber coupling of a 40-element laser diode array"

## Description

L'invention concerne un dispositif d'addition cohérente de faisceaux lasers et plus particulièrement un dispositif pour la mise en phase puis l'addition cohérente de faisceaux de réseaux lasers.

La combinaison d'une multitude d'émetteurs lasers en réseaux est une méthode avantageuse pour augmenter les performances en puissance d'une source laser. Elle permet d'obtenir une source très puissante à partir d'éléments de petite puissance, plus aisées à réaliser technologiquement. De plus, l'utilisation de nombreuses sources de puissance réduite facilite l'évacuation de la chaleur inévitablement produite. Par contre les propriétés principales d'un faisceau laser (cohérence, directivité) sont perdues au niveau du réseau s'il n'existe pas de relation stable de phase entre les différents lasers du réseau.

Le document US 4 761 059 décrit un dispositif dans lequel un faisceau sonde interfère avec plusieurs faisceaux secondaires dans un milieu non linéaire.

Les documents US 4 833 683, US 4 761 059 décrivent des dispositifs permettant d'assurer l'addition cohérente de plusieurs faisceaux laser dans un milieu non linéaire. le document "Injection locking and single-mode fiber coupling of a 40-element laser diode array" de L. GOLDBERG et al publié dans Applied Physic letters 50 (24), 15 June 1987, décrit un dispositif laser esclave pompé par un faisceau laser maître sous incidente non nulle.

La présente invention décrit un perfectionnement permettant d'assurer la cohérence entre les différents éléments d'un réseau de lasers ainsi que d'additionner en phase leurs rayonnements. Le réseau émettra alors un faisceau puissant, cohérent et directif (limité par diffraction) comme s'il s'agissait d'un laser unique.

L'invention concerne donc un dispositif d'addition cohérente de faisceaux lasers, comprenant :
- un laser maître émettant un faisceau lumineux maître d'une longueur d'onde déterminée ;
- plusieurs lasers esclaves recevant une partie du faisceau lumineux maître et retransmettant chacun un faisceau lumineux esclave ;
- un dispositif en matériau non linéaire recevant, d'une part, le faisceau lumineux maître et, d'autre part, les faisceaux lumineux esclaves, le faisceau lumineux maître interférant avec les faisceaux lumineux esclaves, qui jouent alors le rôle de faisceaux pompe, dans le matériau non linéaire pour enregistrer un hologramme, les faisceaux lumineux esclaves diffractant sur cet hologramme jouant ainsi le rôle de lecture ; caractérisé en ce qu'il comporte également :
- un dispositif de répartition recevant le faisceau lumineux maître et le répartissant sous forme de faisceaux d'injection vers les différents lasers esclaves, ces derniers étant disposés chacun en série sur un faisceau d'injection et retransmettant le faisceau lumineux esclave au dispositif en matériau non linéaire ;
- un séparateur de faisceau extrayant du faisceau lumineux maître, un faisceau sonde qui est transmis au dispositif en matériau non linéaire pour interférer avec chaque faisceau lumineux esclave ; en ce que les lasers esclaves sont des réseaux de lasers, chaque réseau de laser recevant un faisceau d'injection selon une direction faisant un angle différent de 0 degré par rapport à la normale à la face d'entrée du réseau laser, et émettent un faisceau lumineux esclave à partir de la même face d'entrée selon une direction sensiblement symétrique de la direction du faisceau lumineux maître par rapport à la normale à la face d'entrée.

Les différents objets et caractéristiques de l'invention apparaîtront plus clairement dans la description qui va suivre faite à titre d'exemple en se reportant aux figures annexées qui représentent :
- la figure 1, un exemple de réalisation simplifié du dispositif de l'invention ;
- les figures 2 et 3, des variantes de réalisation du dispositif de la figure 1 ;
- la figure 4, un autre exemple de réalisation détaillé du dispositif de l'invention ;
- la figure 5, une vue en perspective de détail d'un réseau de laser.

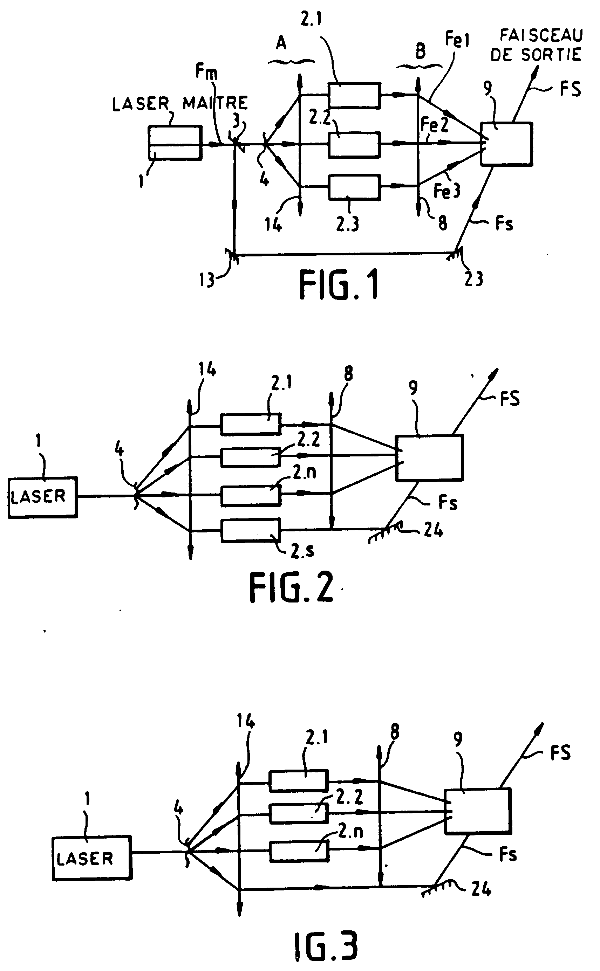

Le dispositif de la figure 1 comprend un laser "pilote" ou laser maître 1 de faible puissance mais ayant de très bonnes propriétés de cohérence (laser monomode). Une partie du faisceau maître Fm émis par le laser 1 est déviée par l'élément 3 (une lame semi-transparente) pour constituer un faisceau sonde Fs. L'autre partie du faisceau maître Fm est divisée et est dirigée à l'aide des dispositifs optiques 4 et 14 (composés par exemple d'une optique diffractive 4 et de lentilles 14) vers différents éléments du réseau. Ces éléments 2.1 à 2.3 peuvent être des amplificateurs optiques, dont le faisceau de sortie est cohérent avec celui du laser pilote 1. Ces éléments peuvent aussi être de véritables petits lasers, qui seront alors utilisés en mode "d'injection locking" "verrouillage par injection" et fonctionneront en lasers esclaves. Dans ce mode de foncionnement, les lasers "esclaves" sont asservis au laser maître 1 et leurs faisceaux esclaves Fe1 à Fe3 sont parfaitement cohérents avec celui du laser maître.

Les faisceaux émis par les éléments 2.1. à 2.3. sont dirigés à l'aide d'une optique (par exemple une lentille) sur un milieu 9 non linéaire MNL. Les faisceaux esclaves Fe1 à Fe3 constituent les "ondes pompes" pour une interaction du type 2 ondes dans le milieu non linéaire 9. Le faisceau sonde Fs provenant du laser maître 1 est lui aussi envoyé dans le milieu non linéaire 9 à l'aide de miroirs 13 et 23. Ce milieu non linéaire peut par exemple être un cristal photoréfractif de BaTiO₃, BSO, GaAs ou InP.

Un hologramme est alors enregistré dans le milieu non linéaire 9 entre les ondes pompes Fe1 à Fe3 et le faisceau sonde Fs. Les faisceaux de pompe qui diffractent sur cet hologramme jouent aussi le rôle de faisceau de lecture. De cette manière, l'énergie des faisceaux de pompe Fe1 à Fe3 est diffractée dans la direction FS du faisceau sonde, avec la même phase que celle imposée par le faisceau sonde. On a donc transfert d'énergie de la pompe vers la sonde. Or la divergence du faisceau sonde est limitée par la diffraction. On a ainsi réalisé une addition cohérente des faisceaux émis par le réseau et en même temps qu'une mise en phase qui permet d'obtenir un faisceau de sortie aussi parfait que la sonde. Il est important de noter que la position relative des éléments du réseau peut être quelconque, et qu'il n'est pas nécessaire d'ajuster les trajets optiques à une fraction de longueur d'onde près pour réaliser l'addition des faisceaux. On peut aussi remarquer que la direction du faisceau de sortie FS est donnée par la direction de la sonde Fs. La déviation du faisceau sonde de faible puissance permet le contrôle de la direction du faisceau de forte puissance (laser agile).

La figure 2 représente une variante de réalisation du dispositif de la figure 1 dans lequel on ne prévoit pas de séparateur de faisceaux pour extraire un faisceau sonde. Le dispositif de la figure 2 comporte en parallèle avec les amplificateurs optiques 2.1 à 2.n, un amplificateur optique 2.s qui fournit un faisceau sonde Fs. Ce faisceau est transmis par un miroir 24 au milieu non linéaire 9.

Le fonctionnement du dispositif de la figure 2 est alors telle que décrite précédemment en référant à la figure 1.

Le dispositif de la figure 2 permet d'avoir un faisceau de sonde Fs plus intense que celui issu directement du faisceau maître Fm.

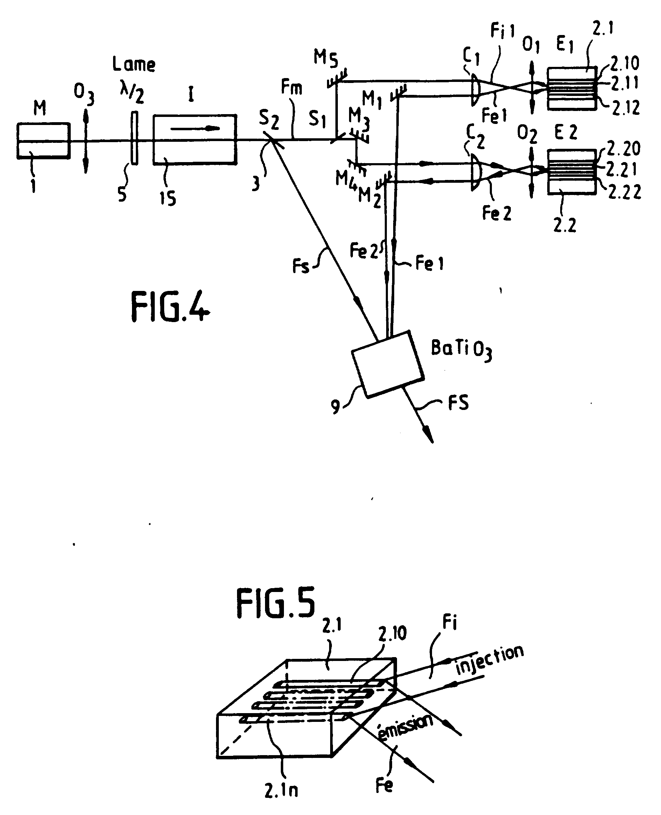

On peut également comme cela est représenté en figure 3, réaliser le dispositif de l'invention en adoptant l'architecture du dispositif de la figure 2 mais en ne prévoyant pas d'amplificateur optique 2.s. Le faisceau sonde Fs n'est alors pas amplifié.

La figure 4 représente une autre forme de réalisation du dispositif de l'invention.

Le laser maître 1 est constitué par une diode laser guidée par l'indice, monomode transverse et longitudinal, de puissance d'émission P = 30 mW environ. Le faisceau maître Fm, mis en forme par la lentille 03 passe au travers d'une lame demi-onde 5 puis d'un isolateur optique 15 à effets Faraday, afin d'empêcher les retours de lumière indésirables vers le laser maître 1. Le faisceau Fm est ensuite séparé en trois à l'aide des miroirs semi-réfléchissants S₁ et S₂.

Le miroir S₂ permet d'obtenir le faisceau sonde Fs.

Le miroir S₁ permet d'obtenir deux faisceaux appelés faisceaux d'injection et servant de faisceaux maîtres pour les lasers esclaves 2.1 et 2.2.

Ces deux faisceaux sont mis en forme par les lentilles cylindriques C1 et C2 et les objectifs 01 et 02 de façon à fournir deux faisceaux de section droite allongée qui vont être injectés aux lasers esclaves 2.1 et 2.2.

Les lasers esclaves 2.1 et 2.2 sont des réseaux d'un certain nombre de lasers 2.10 à 2.1n et 2.20 à 2.2n (10 par exemple) guidés par le gain, d'une puissance relativement forte, 200 mW par exemple. Chaque laser esclave émet donc un faisceau esclave qui est en fait la combinaison de plusieurs faisceaux élémentaires exclaves.

Un faisceau d'injection Fi1 fait un petit angle (4 degrés environ) par rapport à la normale de la face d'entrée du réseau, afin d'optimiser les conditions d'injection et de séparer angulairement le faisceau d'injection Fi d'un faisceau esclave Fe1.

Sur la figure 4, les faisceaux d'injection, tel que Fi1, ont été représentés de façon simplifiés ainsi que le faisceau esclave Fe1.

La figure 5 représente une vue dans l'espace de l'un des réseaux de lasers 2.1. Le réseau de lasers 2.1 reçoit donc le faisceau d'injection Fi1 qui fait un angle non nul avec la normale à la face d'entrée du laser 2.1. Ce faisceau d'injection Fi1 permet d'exciter tous les lasers 2.10 à 2.1 n. Le réseau de lasers émet en échange un faisceau esclave Fe1 qui fait également un angle avec la normale à la face d'entrée du réseau de lasers.

Plus précisément, le faisceau esclave Fei est dans un plan sensiblement symétrique d'un plan contenant le faisceau d'injection Fi1 par rapport à un plan normal à la face d'entrée.

Les faisceaux d'injection sont transmis aux réseaux de lasers par des miroirs M3, M4 et M5.

Les faisceaux esclaves Fe1, Fe2 sont déviés par des miroirs M₁ et M₂ en direction du cristal non linéaire 9, et forment les ondes de pompe pour une interaction à 2 ondes dans le cristal 9. Le faisceau sonde Fs provient du maître après réflexion sur la séparatrice S₂. Le cristal non linéaire est par exemple un cristal de titanate de baryum. On choisit un angle faible (1 degré environ) entre les deux ondes pompes Fe1 et Fe2 et un angle plus important (20° environ) entre l'onde sonde Fs et les ondes pompes Fe1 et Fe2 afin de maximiser le rendement de l'interaction. Le cristal 9 est orienté de manière à favoriser le transfert d'énergie des ondes pompes Fe1 et Fe2 vers l'onde sonde Fs. Le faisceau sonde amplifiée après son passage dans le cristal forme le faisceau de sortie Fs du système, dont la divergence est limitée par diffraction.

L'invention peut servir à l'obtention de sources de puissance cohérentes et directives à partir de réseaux à deux dimensions de lasers à semi-conducteurs. On peut aussi utiliser tout autre milieu laser solide, (comme des barreaux de Yag : Nd), liquide ou gazeux.

Il est bien évident que la description qui précède a été faite qu'à titre d'exemple non limitatif et que d'autres variantes peuvent être envisagées sans sortir du cadre de l'invention. Les exemples numériques et la nature des matériaux indiqués n'ont été fournis que pour illustrer la description.

## Revendications

1. Dispositif d'addition cohérente de faisceaux lasers, comprenant :
- un laser maître (1) émettant un faisceau lumineux maître (Fm) d'une longueur d'onde déterminée ;
- plusieurs lasers esclaves (2.1 à 2.3) recevant une partie du faisceau lumineux maître (Fm) et retransmettant chacun un faisceau lumineux esclave (Fe1 à Fe3) ;
- un dispositif en matériau non linéaire (9) recevant, d'une part, le faisceau lumineux maître (Fm) et, d'autre part, les faisceaux lumineux esclaves (Fe1, Fe2, Fe3), le faisceau lumineux maître interférant avec les faisceaux lumineux esclaves (Fe1, Fe2, Fe3), qui jouent alors le rôle de faisceaux pompe, dans le matériau non linéaire pour enregistrer un hologramme, les faisceaux lumineux esclaves diffractant sur cet hologramme jouant ainsi le rôle de lecture ;
caractérisé en ce qu'il comporte également :
- un dispositif de répartition (4, 14) recevant le faisceau lumineux maître (Fm) et le répartissant sous forme de faisceaux d'injection (Fi1, Fi2) vers les différents lasers esclaves (2.1 à 2.3), ces derniers étant disposés chacun en série sur un faisceau d'injection et retransmettant le faisceau lumineux esclave (Fe1, Fe2) au dispositif en matériau non linéaire (9) ;
- un séparateur de faisceau (3) extrayant du faisceau lumineux maître (Fm), un faisceau sonde (Fs) qui est transmis au dispositif en matériau non linéaire (9) pour interférer avec chaque faisceau lumineux esclave ; en ce que les lasers esclaves (2.1, 2.2) sont des réseaux de lasers (2.10 - 2,1n, 2.20 - 2.2n), chaque réseau (2.1, 2.2) de laser recevant un faisceau d'injection (Fi1, Fi2) selon une direction faisant un angle différent de 0 degré par rapport à la normale à la face d'entrée du réseau laser, et émettent un faisceau lumineux esclave (Fe1, Fe2) à partir de la même face d'entrée selon une direction sensiblement symétrique de la direction du faisceau lumineux maître par rapport à la normale à la face d'entrée.

2. Dispositif selon la revendication 1, caractérisé en ce qu'il comporte, entre les réseaux de lasers (2.1, 2.2) et le dispositif (9) en matériau non linéaire, des dispositifs de focalisation (8) focalisant les faisceaux esclaves (Fe1, Fe2) vers le dispositif (9) en matériau non linéaire.

3. Dispositif selon la revendication 1, caractérisé on ce que le dispositif en matériau non linéaire (9) est en BaTiO₃.

4. Dispositif selon la revendication 1, caractérisé en ce qu'il comporte, entre le dispositif de répartition de faisceau (4) et le réseau de lasers (2.1, 2.2), associé à chaque réseau de lasers, un dispositif optique de transformation de chaque faisceau d'injection en un faisceau de section droite allongée de façon que la plus grande dimension de la section du faisceau permette d'exciter l'ensemble du réseau de lasers.

5. Dispositif selon la revendication 1, caractérisé en ce qu'il comporte, entre le laser maître (1) et le dispositif de répartition de faisceau (4), un isolateur (5, 15).

6. Dispositif selon la revendication 1, caractérisé en ce que le dispositif en matériau non linéaire est en BSO, GaAs ou InP.

## Patentansprüche

1. Vorrichtung zur kohärenten Addition von Laserstrahlen,
- mit einem Meisterlaser (1), der einen Meisterlichtstrahl (Fm) einer bestimmten Wellenlänge aussendet,
- mit mehreren Sklavenlasern (2.1 bis 2.3), die einen Teil des Meisterlichtstrahls (Fm) empfangen und je einen Sklavenlichtstrahl (Fe1 bis Fe3) aussenden,
- mit einer Vorrichtung aus einem nicht-linearen Material (9), die einerseits den Meisterlichtstrahl (Fm) und andererseits die Sklavenlichtstrahlen (Fe1, Fe2, Fe3) zugeführt erhält, wobei der Meisterlichtstrahl mit den Sklavenlichtstrahlen (Fe1, Fe2, Fe3) in Wechselwirkung tritt, die so die Aufgabe von Pumpstrahlen im nicht-linearen Material erfüllen, um ein Hologramm zu registrieren, wobei die Sklavenlichtstrahlen an diesem Hologramm gebeugt werden und somit als Lesestrahl dienen, dadurch gekennzeichnet, daß die Vorrichtung weiter aufweist:
- eine Verteilvorrichtung (4, 14), die den Meisterlichtstrahl (Fm) empfängt und ihn in Form von Injektionsstrahlen (Fi1, Fi2) auf die verschiedenen Sklavenlaser (2.1 bis 2.3) verteilt, die je in Reihe im Verlauf eines Injektionsstrahls liegen und den Sklavenlichtstrahl (Fe1, Fe2) zur Vorrichtung (9) mit nicht-linearem Material weiter übertragen,
- einen Strahlseparator (3), der aus dem Meisterlichtstrahl (Fm) einen Sondenlichtstrahl (Fs) abtrennt, der zur Vorrichtung (9) mit nicht-linearem Material übertragen wird, um mit jedem Sklavenlichtstrahl in Wechselwirkung zu treten,
daß die Sklavenlaser (2.1. 2.2) Lasernetze (2.10 bis 2.1n, 2.20 bis 2.2n) sind und jedes Lasernetz (2.1, 2.2) einen Injektionsstrahl (Fi1, Fi2) gemäß einer Richtung empfängt, die einen Winkel ungleich Null bezüglich der Senkrechten der Eingangsfläche des Lasernetzes bildet, und daß die Sklavenlaser einen Sklavenlichtstrahl (Fe1, Fe2) über die gleiche Eingangsseite gemäß einer Richtung emittieren, die im wesentlichen symmetrisch zur Richtung des Meisterlichtstrahls bezüglich der Senkrechten auf der Eingangsfläche ist.

2. Vorrichtung nach Anspruch 1, dadurch gekennzeichnet, daß sie zwischen den Lasernetzen (2.1, 2.2) und der Vorrichtung (9) mit nicht-linearem Material Fokussiervorrichtungen (8) enthält, die die Sklavenlaser (Fe1, Fe2) auf die Vorrichtung (9) mit nicht-linearem Material fokussieren.

3. Vorrichtung nach Anspruch 1, dadurch gekennzeichnet, daß die Vorrichtung (9) aus nicht-linearem Material aus BaTiO₃ ist.

4. Vorrichtung nach Anspruch 1, dadurch gekennzeichnet, daß sie zwischen der Vorrichtung (4) zur Strahlverteilung und dem Lasernetz (2.1, 2.2) in Zuordnung zu jedem Lasernetz eine optische Vorrichtung zur Umwandlung jedes Injektionsstrahls in einen Strahl mit länglichem Querschnitt aufweist, so daß die größte Abmessung des Querschnitts des Strahls die Anregung des ganzen Lasernetzes erlaubt.

5. Vorrichtung nach Anspruch 1, dadurch gekennzeichnet, daß sie zwischen dem Meisterlaser (1) und der Vorrichtung zur Strahlverteilung (4) einen Isolator (5, 15) besitzt.

6. Vorrichtung nach Anspruch 1, dadurch gekennzeichnet, daß die Vorrichtung (9) mit nicht-linearem Material aus BSO, GaAs oder InP besteht.

## Claims

1. Device for coherent addition of laser beams, comprising:
- a master laser (1) emitting a master light beam (Fm) of determined wavelength;
- a plurality of slave lasers (2.1 to 2.3) receiving a part of the master light beam (Fm) and each retransmitting a slave light beam (Fe1 to Fe3);
- a device made of a non-linear material (9) which receives, on the one hand, the master light beam (Fm) and, on the other hand, the slave light beams (Fe1, Fe2, Fe3), the master light beam interfering with the slave light beams (Fe1, Fe2, Fe3), which then act as pump beams, in the non-linear material in order to record a hologram, the slave light beams being defracted on this hologram thus acting in a read capacity;
characterized in that it also includes:
- a distributor device (4, 14) receiving the master light beam (Fm) and distributing it in the form of injection beams (Fi1, Fi2) to the various slave lasers (2.1 to 2.3), the latter each being arranged in series with an injection beam and retransmitting the slave light beam (Fe1, Fe2) to the device (9) made of non-linear material;
- a beam splitter (3), extracting from the master light beam (Fm) a probe beam (Fs) which is transmitted to the device (9) made of non-linear material in order to interfere with each slave light beam; in that the slave lasers (2.1, 2.2) are laser arrays (2.10 - 2.1n, 2.20 - 2.2n), each laser array (2.1, 2.2) receiving an injection beam (Fi1, Fi2) in a direction making a non-zero angle with the normal to the input face of the laser array, and emitting a slave light beam (Fe1, Fe2) from the same input face in a direction which is substantially symmetrical with the direction of the master light beam relative to the normal to the input face.

2. Device according to Claim 1, characterized in that it includes, between the laser arrays (2.1, 2.2) and the device (9) made of non-linear material, focusing devices (8) which focus the slave beams (Fe1, Fe2) towards the device (9) made of non-linear material.

3. Device according to Claim 1, characterized in that the device (9) made of non-linear material is made of BaTiO₃.

4. Device according to Claim 1, characterized in that it includes, between the beam distribution device (4) and the laser array (2.1, 2.2), and associated with each laser array, an optical device for converting each injection beam into a beam of elongated cross-section, so that the longer dimension of the cross-section of the beam makes it possible to excite the entire laser array.

5. Device according to Claim 1, characterized in that it includes an isolator (5, 15) between the master laser (1) and the beam distribution device (4).

6. Device according to Claim 1, characterized in that the device made of non-linear material is made of BSO, GaAs or InP.
